# EUROPEAN PATENT APPLICATION

(11) **EP 2 309 368 A1**
(43) Date of publication of application: **13.04.2011**
(21) Application number: 09773277.0
(22) Date of filing: 10.06.2009
(51) Int. Cl.: G06F 3/048, G06F 3/14

(54) **INFORMATION PROCESSING DEVICE, DISPLAY CONTROL METHOD, AND RECORDING MEDIUM**

(30) Priority: 30.06.2008 JP 2008169873
(71) Applicant: NEC Corporation, Minato-ku Tokyo 108-8001 (JP)
(72) Inventor: FUYUNO Tetsuya, Tokyo 108-8001 (JP); TAKIKAWA Jun, Tokyo 108-8001 (JP)
(74) Representative: Betten & Resch
(86) International application number: PCT/JP2009/060600
(87) International publication number: WO 2010/001699

(57) **Abstract**

An information processing device (100) includes; a plurality of display parts (10, 20), a display control part (41) controlling the display operation of the display parts (10, 20); an operation reception part (42) receiving the entry of a given operation instruction on display data displayed on one of the display parts (10, 20); and a data processing part (43) executing processing based on the content of the display data displayed on the one display part and the content of the operation instruction received by the operation reception part (42). The display control part (41) displays data presenting the results of processing by the data processing part (43) on another display part different from the one display part.

## Description

### Technical Field

The present invention relates to an information processing device and particularly to an information processing device having multiple display screens, a display control method, and a recording medium.

### Background Art

In recent years, cellular phones have been multi-functioned and could be used as a small computer. For example, one of the functions of a cellular phone is data communication capability, in accompaniment with which the cellular phone serves as a device for displaying a book, magazine, or newspaper to browse received data. As electronic devices have increasingly been used as a display device, there has been demand for further improvement in operability and visibility of electronic devices.

Patent Literature 1 to 3 discloses techniques for improving visibility and operability of images displayed on an electronic device. More specifically, Patent Literature 1 discloses a portable electronic device comprising two display units that can mutually be opened/closed in the folding direction and can be integrated in parallel at their sides. On the other hand, Patent Literature 2 discloses an image display control device that is capable of displaying an image around a touched part on the display screen in an enlarged manner to a preset magnification. Furthermore, Patent Literature 3 discloses a display system comprising two display parts connected via radio communication. This display system is capable of displaying on the second display part a part of display data displayed on the first display part in an enlarged manner based on the relative position of the second display part with respect to the first display part.

Patent Literature 1: International Publication Booklet No. WO2005/020046;
Patent Literature 2: Unexamined Japanese Patent Application KOKAI Publication No. 2003-233368; and
Patent Literature 3: Unexamined Japanese Patent Application KOKAI Publication No. 2008-3574.

### Summary of Invention

### Problem to be Solved by the Invention

However, the techniques disclosed in the above Patent Literature 1 to 3 still need to be improved in visibility and operability as a display device. Particularly, in the Patent Literature 2, although a desired part on the display screen is displayed in an enlarged manner by touching it, the enlarged screen is displayed in place of the original screen. Then, for making reference to the original screen or doing some operation on the original screen, an operation to return to the original screen is required; then, operability and visibility is not sufficient. In the Patent Literature 3, the second display part has to be moved relatively to the first display part. Therefore, it is difficult for the operator who is moving the second display part to further do some operation on the display data displayed on the second display part; then, poor operability is a problem.

The present invention is invented in view of the above circumstances and an exemplary object of the present invention is to provide an information processing device, display control method, and recording medium for improving operability and visibility with respect to display data.

### Means for Solving the Problem

The information processing device according to an exemplary aspect of the present invention in order to achieve the above object comprises multiple display parts, a display control means controlling the display operation of the display parts, an operation instruction reception means receiving the entry of a given operation instruction on display data displayed on one of the multiple display parts, and a data processing means executing processing based on the content of the display data displayed on the one display part and the content of the operation instruction received by the operation instruction reception means,
wherein the display control means displays data presenting the results of processing by the data processing means on another display part that is different from the one display part.

Furthermore, the recording medium according to another exemplary aspect of the present invention records programs that allow an information processing device comprising multiple display parts to realize a display control means controlling the display operation of the display parts, an operation instruction reception means receiving the entry of a given operation instruction on display data displayed on one of the multiple display parts, and a data processing means executing processing based on the content of the display data displayed on the one display part and the content of the operation instruction received by the operation instruction reception means,
wherein the display control means displays data presenting the results of processing by the data processing means on another display part that is different from the one display part.

The display control method according to another exemplary aspect of the present invention has an operation instruction reception step of receiving the entry of a given operation instruction on display data displayed on one of multiple display parts; a data processing step of executing processing based on the content of the display data displayed on the one display part and the content of the operation instruction received by the operation instruction reception step; and a display control step of displaying data presenting the results of processing in the data processing step on another display part that is different from the one display part.

### Effect of the Invention

Having the above configuration, the present invention has excellent effect that an information processing device is improved in operability of the display operation and visibility of the display data.

### Brief Description of Drawings

[FIG. 1] An illustration showing the appearance of the information processing terminal in Embodiment 1;
[FIG. 2] A block diagram showing the configuration of the information processing terminal shown in FIG. 1;
[FIG. 3] An illustration showing operations and display of the information processing terminal shown in Fig. 1;
[FIG. 4] An illustration showing operations and display of the information processing terminal shown in FIG. 1;
[FIG. 5] An illustration showing operations and display of the information processing terminal shown in FIG. 1;
[FIG. 6] An illustration showing operations and display of the information processing terminal shown in FIG. 1;
[FIG. 7] An illustration showing operations and display of the information processing terminal shown in FIG. 1;
[FIG. 8] An illustration showing operations and display of the information processing terminal shown in FIG. 1;
[FIG. 9] An illustration showing operations and display of the information processing terminal shown in FIG. 1;
[FIG. 10] An illustration showing operations and display of the information processing terminal shown in FIG. 1;
[FIG. 11] An illustration showing operations and display of the information processing terminal shown in FIG. 1;
[FIG. 12] An illustration showing operations and display of the information processing terminal shown in FIG. 1;
[FIG. 13] An illustration showing operations and display of the information processing terminal shown in FIG. 1;
[FIG. 14] An illustration showing operations and display of the information processing terminal shown in FIG. 1;
[FIG. 15] An illustration showing operations and display of the information processing terminal shown in FIG. 1;
[FIG. 16] An illustration showing operations and display of the information processing terminal shown in FIG. 1;
[FIG. 17] An illustration showing operations and display of the information processing terminal shown in FIG. 1;
[FIG. 18] An illustration showing operations and display of the information processing terminal shown in FIG. 1;
[FIG. 19] An illustration showing operations and display of the information processing terminal shown in FIG. 1;
[FIG. 20] An illustration showing operations and display of the information processing terminal shown in FIG. 1;
[FIG. 21] An illustration showing operations and display of the information processing terminal shown in FIG. 1;
[FIG. 22] A flowchart showing the action of the information processing terminal shown in FIG. 1;
[FIG. 23] An illustration showing the appearance and an operation/display of the information processing terminal in Embodiment 2; and
[FIG. 24] An illustration showing the appearance and an operation/display of the information processing terminal in Embodiment 3.

### Best Mode for Carrying Out the Invention

The information processing device according to an exemplary aspect of the present invention comprises multiple display parts, a display control means controlling the display operation of the display parts, an operation instruction reception means receiving the entry of a given operation instruction on display data displayed on one of the multiple display parts, and a data processing means executing processing based on the content of the display data displayed on the one display part and the content of the operation instruction received by the operation instruction reception means,
wherein the display control means displays data presenting the results of processing by the data processing means on another display part that is different from the one display part.

Furthermore, in the above information processing device, the data processing means accesses a data storage region corresponding to the content of the operation instruction and acquires from the data storage region data corresponding to the content of the display data displayed on the one display part, and
the display control means displays the data acquired by the data processing means on the other display part.

Furthermore, in the above information processing device, the data processing means accesses a given Web site corresponding to the content of the operation instruction and acquires from the Web site data corresponding to the content of the display data displayed on the one display part, and
the display control means displays the data acquired by the data processing means on the other display part.

Furthermore, in the above information processing device, the data processing means accesses a given Web site corresponding to the content of the operation instruction and acquires from the Web site data corresponding to the data at a specific position preset for the display data displayed on the one display part.

Furthermore, in the above information processing device, a selection reception means receiving the entry of selection of a given position within the display data displayed on the one display part is further provided, and
the data processing means accesses a given Web site corresponding to the content of the operation instruction and acquires from the Web site data corresponding to the data at the selected position selected by the selection reception means within the display data displayed on the one display part.

Furthermore, in the above information processing device, when the operation instruction received by the operation instruction reception means is an information search instruction, the data processing means accesses a Web site performing information search and acquires from the Web site data presenting the results of information search corresponding to the content of the display data,

Furthermore, in the above information processing device, when the operation instruction received by the operation instruction reception means is a purchase instruction, the data processing means accesses a Web site performing purchase processing and acquires from the Web site data presenting a purchase processing screen corresponding to the content of the display data.

Furthermore, in the above information processing device, when the operation instruction received by the operation instruction reception means is an information sharing instruction, the data processing means accesses an information sharing Web site corresponding to the content of the display data and acquires data of the Web site.

Furthermore, in the above information processing device, the operation instruction reception means displays on the display parts operation instruction display presenting operation instructions preset according to the content of the display data displayed on the one display part and receives the entry of selection on the operation instruction display displayed on the display parts so as to receive the entry of an operation instruction corresponding to the operation instruction display.

Furthermore, in the above information processing device, a first operation instruction display as the operation instruction display displayed on the display parts by the operation instruction reception means and a second operation instruction display presenting further detailed operation instructions for the operation instructions corresponding to the first operation instruction display are preset,
the operation instruction reception means displays the first operation instruction display and receives a selection from the first operation instruction display, and displays the second operation instruction display preset for the selected operation instruction corresponding to the first operation instruction display and receives a selection from the second operation instruction display, and
the data processing means executes processing based on the content of the selected operation instruction corresponding to the second operation instruction display.

The above-described information processing device of the present invention first displays given display data on one display part provided. Then, as the user enters an operation instruction on the display data displayed on the one display part, the information processing device executes processing based on the content of the display data displayed and the content of the operation instruction. For example, the information processing device searches for information within the display data, accesses a Web site for purchasing a product or service within the display data, or furthermore accesses a Web site for sharing information within the display data. Then, the information processing device displays the results of processing based on the content of the display data and the content of the operation instruction on another display part that is different from the one on which the display data are displayed. In other words, the information processing device continues to display the original display data on one display part and displays on another display part processing executed based on the display data such as search results and a purchase Web site screen.

Therefore, the user can view the display data and simultaneously view and operate on the processing data with respect to the display data on another display part with simple operations. Consequently, operability of the display operation and visibility of the display data can be improved.

Furthermore, in the above information processing device, the multiple display parts are two display parts engaged in the manner that they can be viewed simultaneously, and
the display control means displays, on the other display part, data presenting the results of processing executed by the data processing means based on the content of display data displayed on one of the display parts.

Furthermore, in the above information processing device, the two display parts are coupled in the manner that they are capable of opening/closing or sliding.

Furthermore, in the above information processing device, the display parts consist of a touch panel and are capable of receiving touch input from outside, and
the operation instruction reception means receives the selection of operation instruction display displayed on the display parts that is done by touch input on the operation instruction display so as to receive the entry of the selected operation instruction corresponding to the operation instruction display.

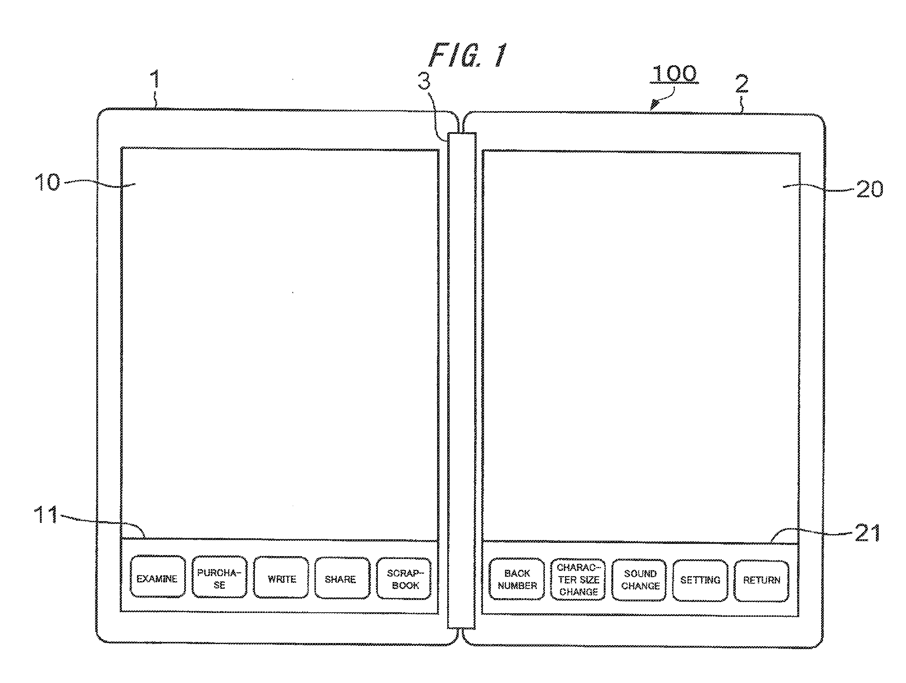

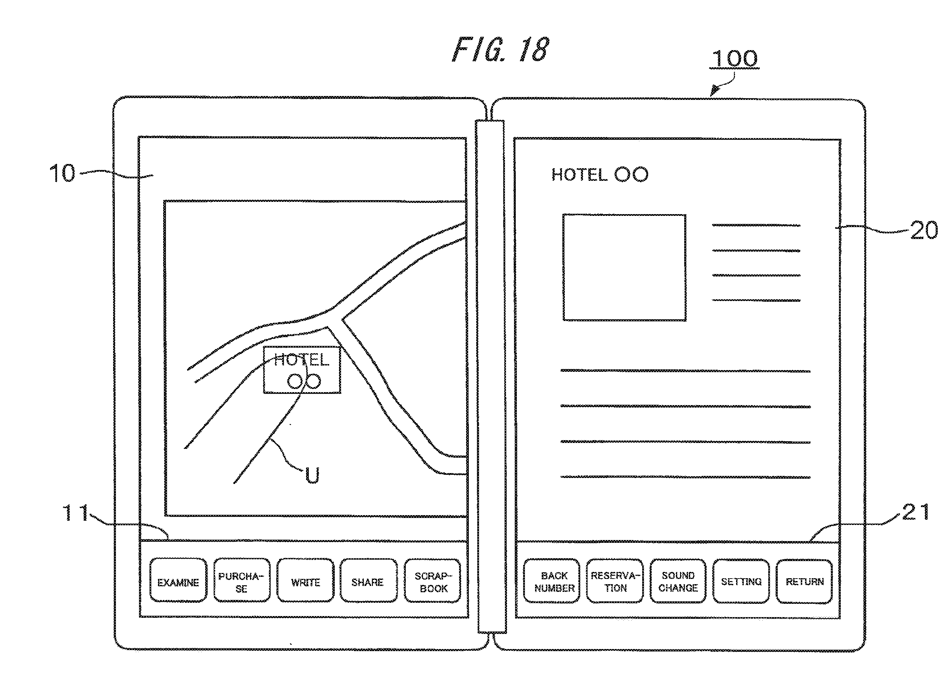

Embodiments of the information processing device, recording medium, and display control method according to the present invention will be described hereafter with reference to FIGS. 1 to 24.

### <Embodiment 1>

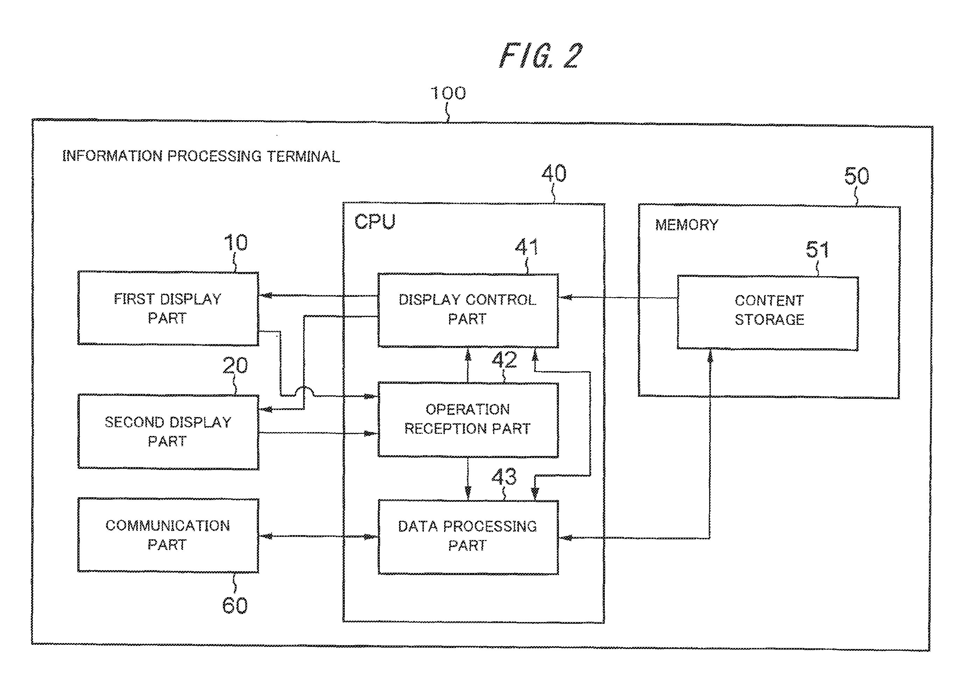

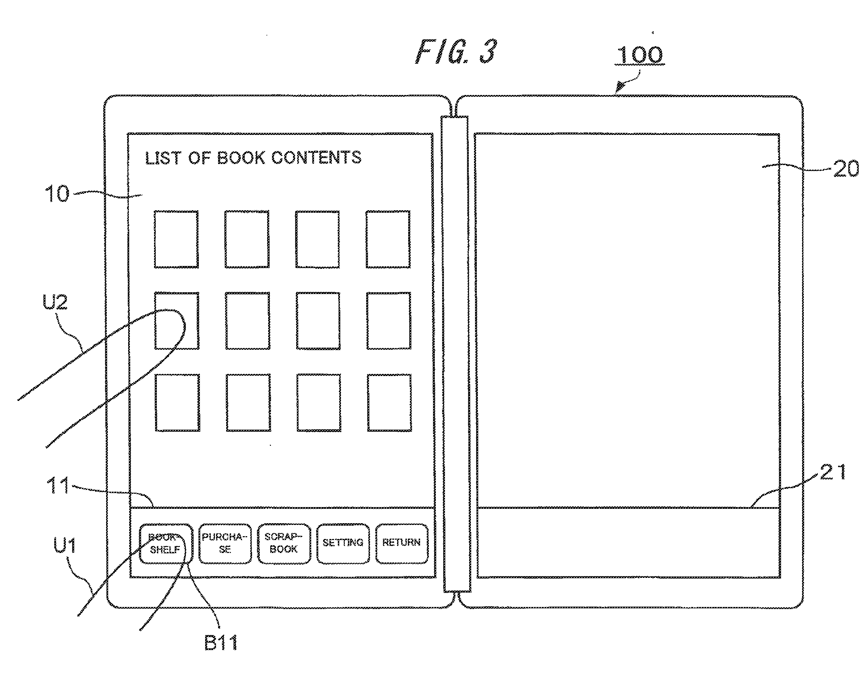

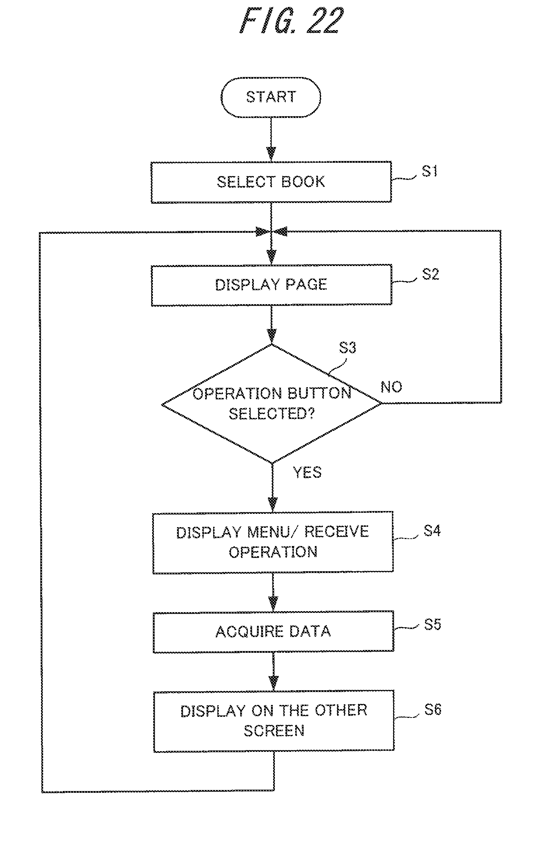

Embodiment 1 of the present invention will be described with reference to FIGS. 1 to 22. FIG. 1 is an illustration showing the appearance of an information processing terminal 100 of this embodiment. FIG. 2 is a functional block diagram showing the configuration of the information processing terminal 100. FIGS. 3 to 21 are illustrations showing operations and displays of the information processing terminal 100. FIG. 22 is a flowchart showing the action of the information processing terminal 100.

### [Structure]

The information processing terminal 100 (an information processing device) of this embodiment is a folding-type information processing terminal having a first enclosure 1 and a second enclosure 2 that are coupled to each other via a hinge part 3 so that they can be opened/closed on an arbitrary basis. The first enclosure 1 comprises a first display part 10 and the second enclosure 2 comprises a second display part 20. Therefore, when the information processing terminal 100 is not in use, the first and second enclosures 1 and 2 are folded with the first and second display parts 10 and 20 being inside. On the other hand, the first and second enclosures 1 and 2 are opened for use so that the first and second display parts 10 and 20 can be viewed at the same time. The first and second display parts 10 and 20 each consist of a touch panel. Upon touch input by pressing with a finger or stylus pen from outside, the input is received.

The information processing terminal 100 incorporates, as shown in FIG. 2, a CPU 40 as an processing unit, a memory 50 as a storage, and a communication part 60 realizing radio communication. In other words, the information processing terminal 100 has the basic configuration as a computer. More specifically, the CPU 40 comprises a display control part 41, an operation reception part 42, and a data processing part 43, which are configured by installing programs in the CPU 40. The memory 50 comprises a content storage 51. These components will be described in detail later.

The display control part 41 (the display control means) has the function of controlling display operation of the first and second display parts 10 and 20 as the basic function. In other words, the display control part 41 reads and displays the content data stored in the content storage 51 of the memory 50 on the main display regions (the regions) that are the major parts of the first and second display parts 10 and 20. Furthermore, the display control part 41 displays multiple operation buttons in the operation button display regions 11 and 21 provided at the bottoms of the first and second display parts 10 and 12.

Furthermore, the display control part 41 displays on the display parts 10 and 20 results of processing executed by the data processing part 43 in accordance with the content of an operation instruction the operation reception part 42 has received from the user and the content of the display data. Here, when the data processing part 43 executes processing based on the display data displayed on one display part, the display control part 41 displays the processing results on the other display part. Such a processing will be described in detail later.

The operation reception part 42 (the operation instruction reception means) receives the entry of operation from the user as the basic function. Particularly, in the information processing terminal 100 of this embodiment, the operation reception part 42 receives touch input on the first and second display parts 10 and 20 each consisting of a touch panel as the entry of operation from the user. For example, when the user touches any of the operation buttons (the first operation instruction display) displayed in the operation button display regions 11 and 12 of the display parts 10 and 20, the operation reception part 42 receives an operation instruction corresponding to the touched operation button as an operation instruction on the display data displayed on the display parts 10 and 20.

Furthermore, when further detailed operation instructions are preset for the operation instruction corresponding to the selected (touched) operation button as described above, the display control part 41 displays on the display parts 10 and 20 a menu screen for making a selection among operation item displays (the second operation instruction display) for each of the operation instructions. Then, the operation reception part 42 receives an operation instruction corresponding to the operation item display on the menu screen that is touched by the user as an operation instruction on the display data displayed on the display parts 10 and 20.

Here, the display control part 41 identifies the category of display data to be displayed on the first and second display parts 10 and 20 and, depending on the identified category, displays predetermined categories of operation button display (the first operation instruction display) or operation item display (the second operation instruction display). Here, the category of display data can be identified with reference to information contained in the display data at a specific position or in a specific format in advance.

Furthermore, provided that the user selects a specific position of the display data displayed on the display part 10 or 20 by touching or dragging on it, the operation reception part 42 has the function of receiving the selection of data such as characters contained at the selected position (the selection reception means). The data processing part 43 described later executes processing corresponding to the above-described operation instruction based on some data on the display data selected as just described.

With the operation reception part 42 receiving an operation instruction from the user, the data processing part 43 (the data processing means) executes processing based on the content of display data displayed on the display parts 10 and 20 and the content of the received operation instruction and provides the processing results to the display control part 41. For example, the data processing part 43 executes searching based on the content of the display data, or accesses a Web site relating to the display data and acquires data of the Web site. Then, the display control part 41 displays on the display parts 10 and 20 the results of processing by the data processing part 43.

Functions of the display control part 41, operation reception part 42, and data processing part 43 will be described in further detail hereafter.

First, in the initial state, the display control part 41 of the information processing terminal 100 displays the operation buttons as shown in FIG. 3 in the operation button display region 11. Then, as the user touches a button "bookshelf" B11 as shown in FIG. 3 (see the reference code U1), the operation reception part 42 receives the entry of this operation instruction and the display control part 41 displays a list of viewable book contents on the first display part 10. Here, the book contents are data of newspapers, magazines, and comics ("books" hereafter) already stored in the content storage 51 of the information processing terminal 100 or available from Web sites on the Internet by the data processing part 43 accessing them via the communication part 60. The display control part 41 displays the index data of the book data so that selection can be made.

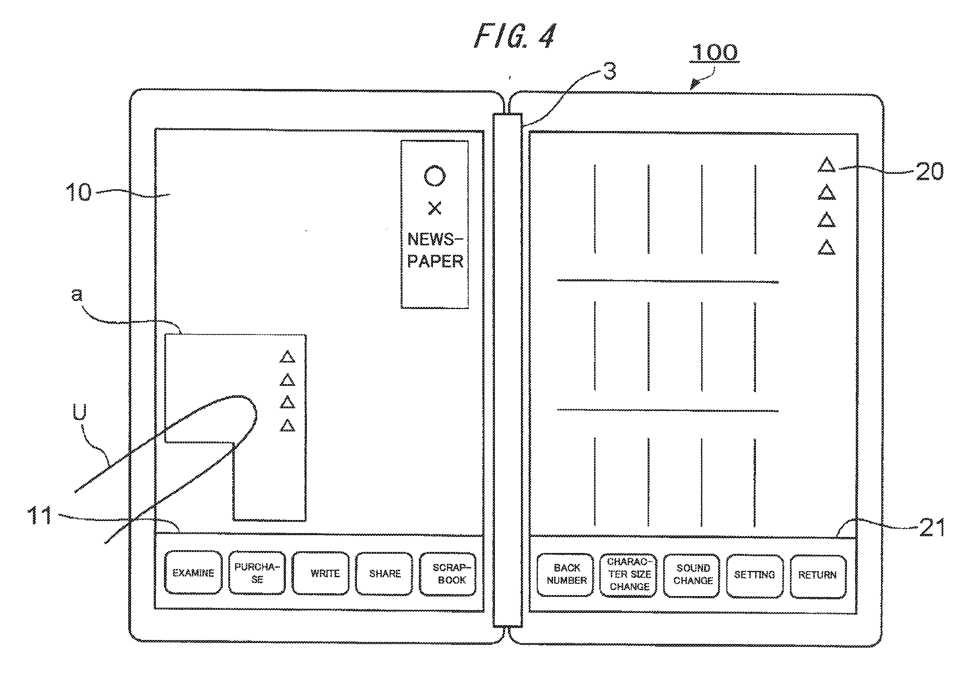

Then, as the user touches the index of particular book data to select it as shown in FIG. 3 (see the reference code U2), the operation reception part 42 receives the selection of the book data. Subsequently, the display control part 41 displays the selected book data on the first display part 10 as shown in FIG. 4. Here, a newspaper is selected. The newspaper data are displayed on the first display part 10 in Fig. 4; however, the newspaper data are displayed on both display parts 10 and 20 in practice.

Furthermore, the display control part 41 of the information processing terminal 100 recognizes that the category of the data to be displayed is "newspaper" from information within the book data to be displayed and displays preset operation buttons corresponding to the "newspaper" in the operation button display regions 11 and 21 of the display parts 10 and 20. For example, when the category of the display data is "newspaper," as shown in FIG. 4, the display control part 41 displays the operation buttons possibly used for newspaper display data such as "examine," "scrapbook," "back number," and "character size change."

Subsequently, with regard to the display data displayed on the first display part 10, as the user touches the display part 10 to select a specific position, namely a part of the display data (see the reference code U), the operation reception part 42 identifies a selected range a within the selected display data and receives the entry of selection of the selected range a. For example, in the case shown in FIG. 4, a section a is preset within the display data. When the user selects the section a, the operation reception part 41 identifies the section a as the selected range a.

Then, the display control part 41 displays data associated in advance with the data within the selected range a on another display part that is different from the display part on which the selected range a is selected. For example, in the case of FIG. 4, the display control part 41 displays the data within the selected range a among the display data displayed on the first display part 10 on the entire second display part 20 in an enlarged manner compared with the display state on the first display part 10. Here, the display control part 41 displays on the second display part 20 the data having the same contents but having a different format from the data format displayed on the first display part 10 as the data associated in advance with the data within the selected range a. More specifically, in the case of FIG. 4, data of an image format are displayed on the first display part 10. When the selected range a is selected, the display control part 41 displays on the display part 20 data having the same contents as the data within the selected range a but having a character format. Here, the display control part 41 may acquire data of a different format to be displayed on the second display part 20 from the image data within the selected range a by the data processing part 43 performing a given character recognition processing. Alternatively, the display control part 41 may acquire data of a different format stored in advance in the content storage 51 or in another computer on the network.

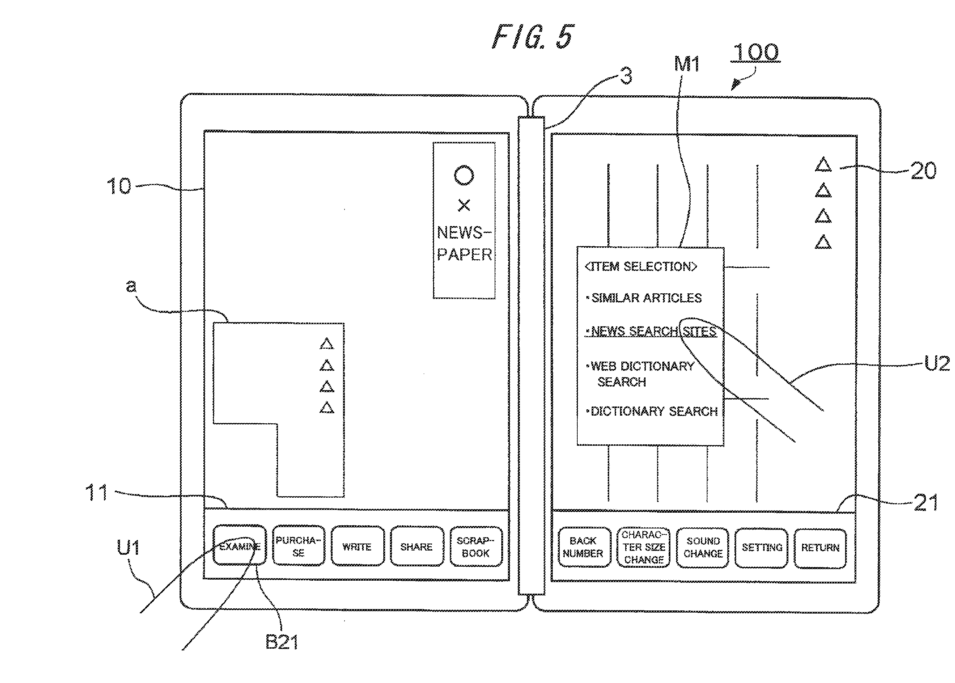

Then, in order for the user to perform a specific operation on the display data, he/she selects an operation button in the operation button display regions 11 and 21 while the intended display data are displayed. For example, in the case shown in FIG. 5, the user wishes to further examine a particular "article" displayed on the second display part 20. In this case, the user touches a button "examine" B21 to select it (see the reference code U1) and the operation reception part 42 receives the selection. Then, the display control part 41 displays a menu screen M1 presenting a list of further detailed operation items corresponding to the operation content "examine" on the second display part 20 on which the article is displayed. The user touches a detailed operation item on the menu screen M1 ("news search sites" in this case) (see the reference code U2) and the operation reception part 42 receives the selection of operation content indicated by this operation item.

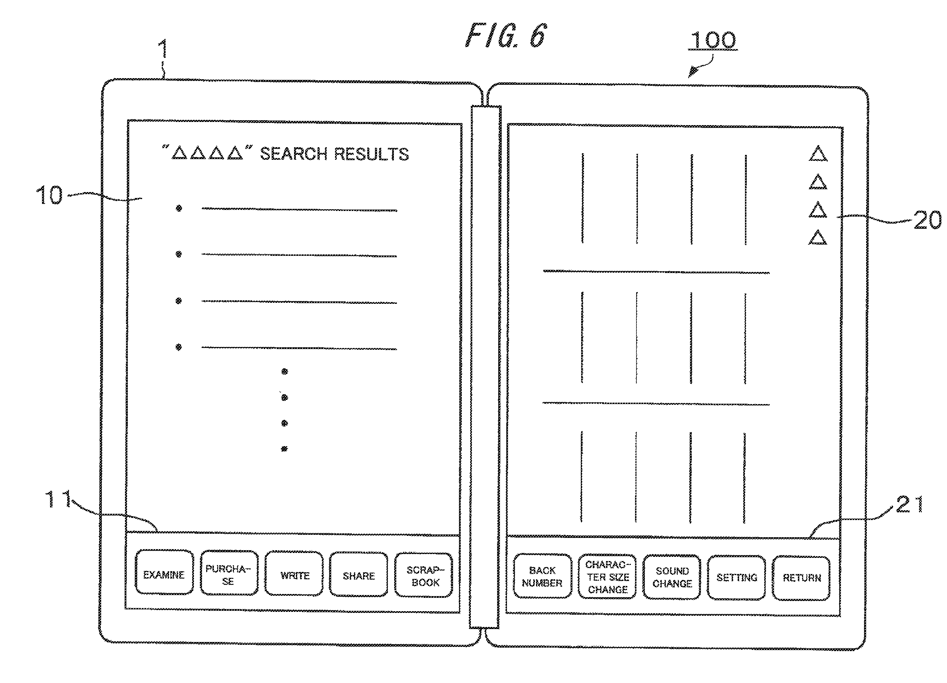

Then, the data processing part 43 executes processing based on the content of the displayed "article" and the content of the operation selected by the user. In the case of FIG. 5, as the user has selected "news search sites" as the operation content, the data processing part 43 accesses a preset Web site (news search site) via the communication part 60 for news search, searches other news relating to the content of the displayed "article," and acquires data presenting the search results. More specifically, for example, the data processing part 43 instructs the news search site to search for news containing the character string of the article title (ΔΔΔΔ) and acquires the search results (for example, data presenting a list of matched article tiles). Then, the display control part 41 displays the acquired search results on the first display part 10 that is different from the second display part 20 on which the search-target article is displayed as shown in FIG. 6.

In the above description, a Web site is used to search for news relating to the displayed "article" to acquire search results. Alternatively, a given data storage region such as a database on another network may be used to search for information to acquire search results. Furthermore, information stored in the information processing terminal 100 may be searched for targeted information.

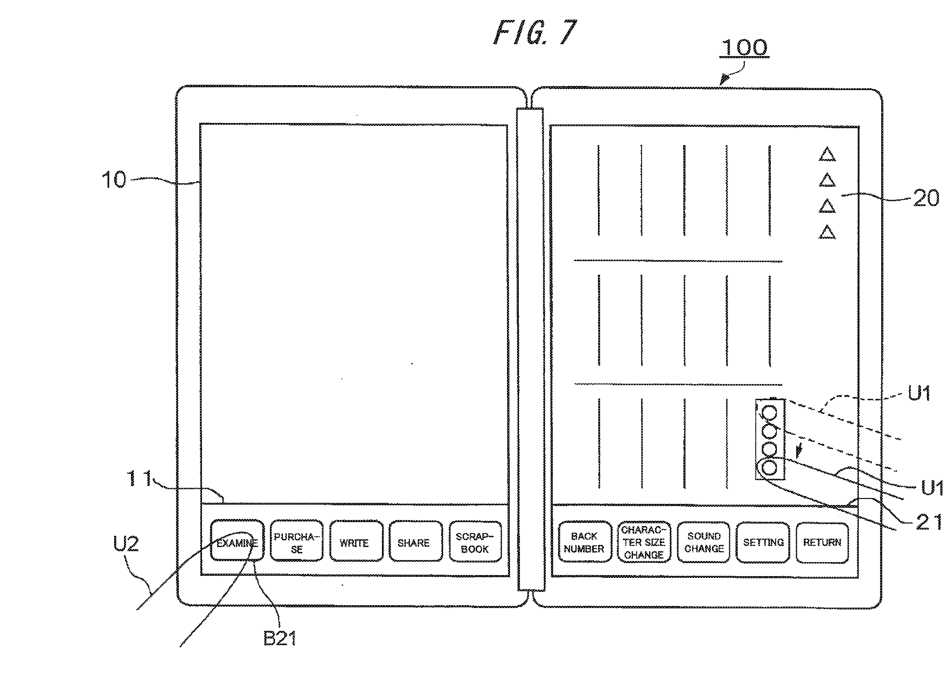

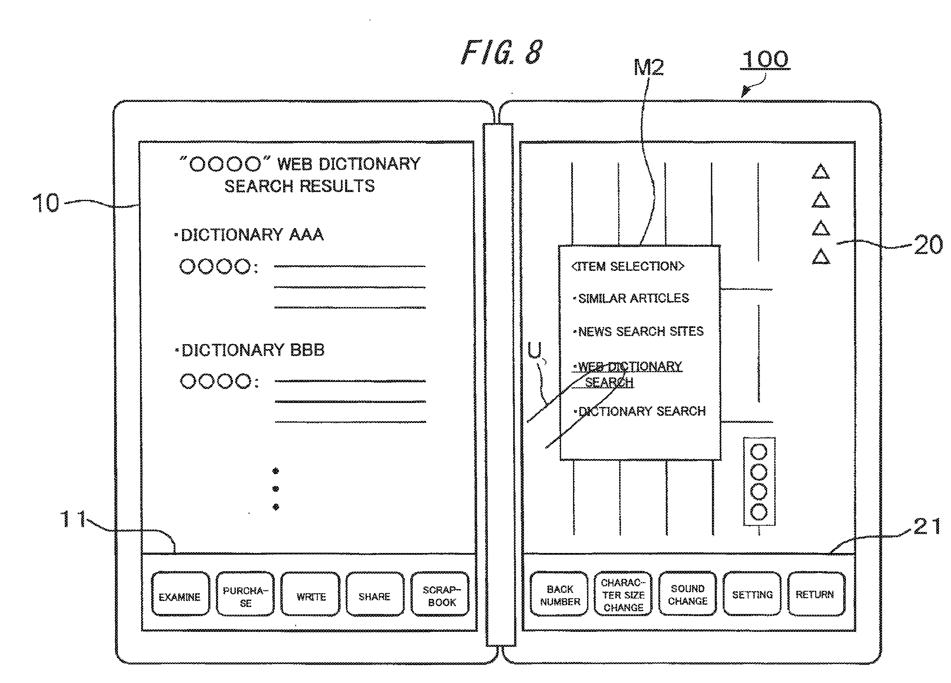

Another operation case is shown in FIGS. 7 and 8. FIGS. 7 and 8 are illustrations showing the operation and display for the user to examine a specific phrase in the enlarged display of the article on the information processing terminal 100. More specifically, first, the user drags on character data in the article to select the character string (see the reference code U1). Then, the operation reception part 42 receives the selection of the character string. Then, the user touches a button "examine" B21 in the operation button display region 11 to select it (see the reference code U2) and the operation reception part 42 receives the selection of the operation content. Then, the display control part 41 displays a menu screen M2 presenting a list of further detailed operation items corresponding to the operation content "examine" on the second display part 20 on which the "article" is displayed as shown in FIG. 8. The user touches a detailed operation item ("Web dictionary search" in this case) on the menu screen M2 to select it (see the reference code U) and the operation reception part 42 receives the selection of the operation content indicated by this operation item.

Then, the data processing part 43 executes data processing corresponding to the phrase "○○○○" selected in the displayed "article" and the operation content "Web dictionary search" selected by the user. More specifically, in the case of FIG. 8, the data processing part 43 accesses a Web site providing dictionary information via the communication part 60, executes searching for the meaning of the selected phrase "○○○○," and acquires data presenting the search results (character data describing the meaning of the phrase "○○○○" in this case). Then, the display control part 41 displays the acquired search results on the first display part 10 that is different from the second display part 20 on which the search-target phrase in the article is displayed as shown in FIG. 8.

In the above description, the phrase to be examined is selected (see the reference code U1 in FIG. 7) and then the button "examine" is selected (see the reference code U2 in FIG. 7). When the button "examine" has already been selected, there is no need of selecting the button "examine" once again. For example, when the processing results based on the operation content supposed to be selected is displayed on the first display part 10 as shown in FIG. 8, it is possible that another phrase is then selected on the second display part 20 and as soon as the operation reception part 42 receives the selection, the data processing part 43 executes dictionary-searching for the other selected phrase and the display control part 41 displays the search results on the first display part 10.

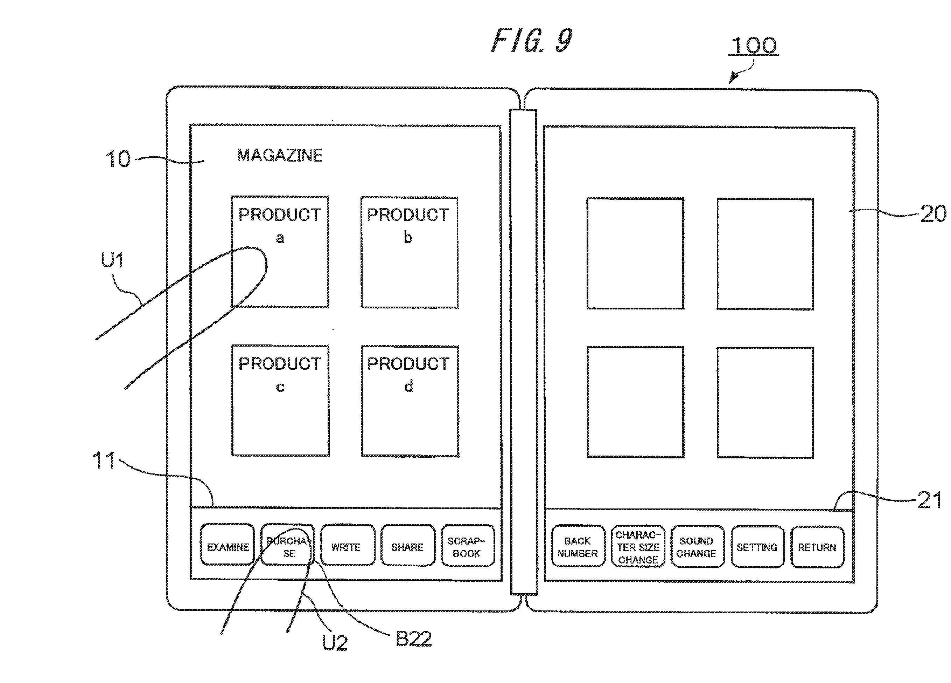

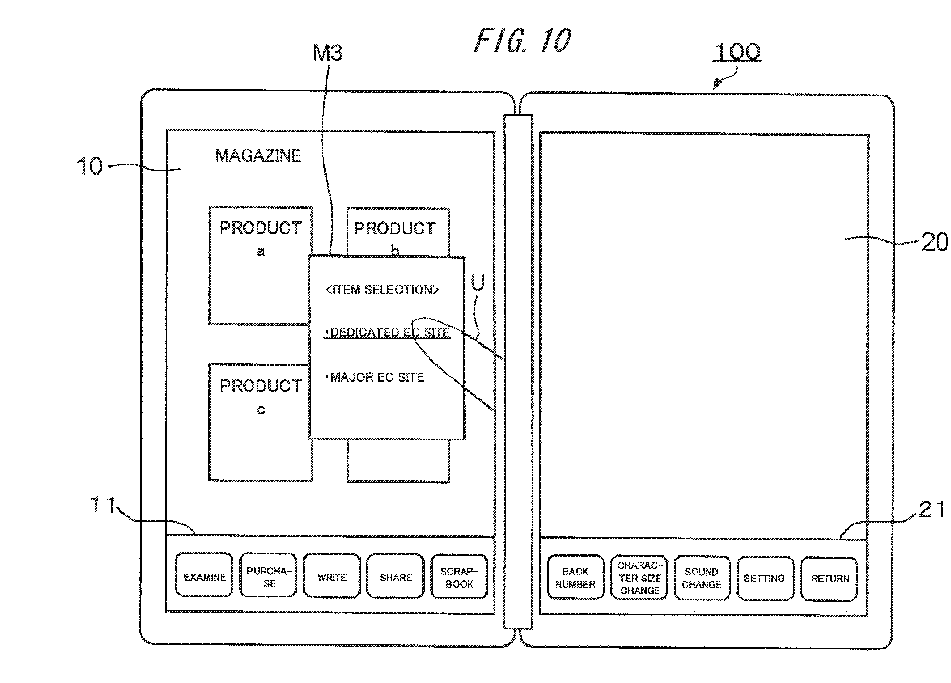

Another operation case is shown in FIGS. 9 to 11. FIGS. 9 to 11 are illustrations showing the operation and display for the user browsing a magazine on the information processing terminal 100 to purchase a "Product a" found in the magazine. First, the user selects the display position of the "Product a" in the displayed magazine as shown in FIG. 9 (see the reference code U1). Then, the operation reception part 42 receives the selection of the "Product a." Then, the user touches a button "purchase" B22 in the operation button display region 11 to select it (see the reference code U2) and the operation reception part 42 receives the selection of the operation content. Then, the display control part 41 displays a menu screen M3 presenting a list of further detailed operation items corresponding to the operation content "purchase" on the first display part 10 on which the "Product a" is displayed as shown in FIG. 10. The user touches a detailed operation item ("dedicated EC site" in this case) on the menu screen M3 to select it (see the reference code U) and the operation reception part 42 receives the selection of the operation content indicated by this operation item.

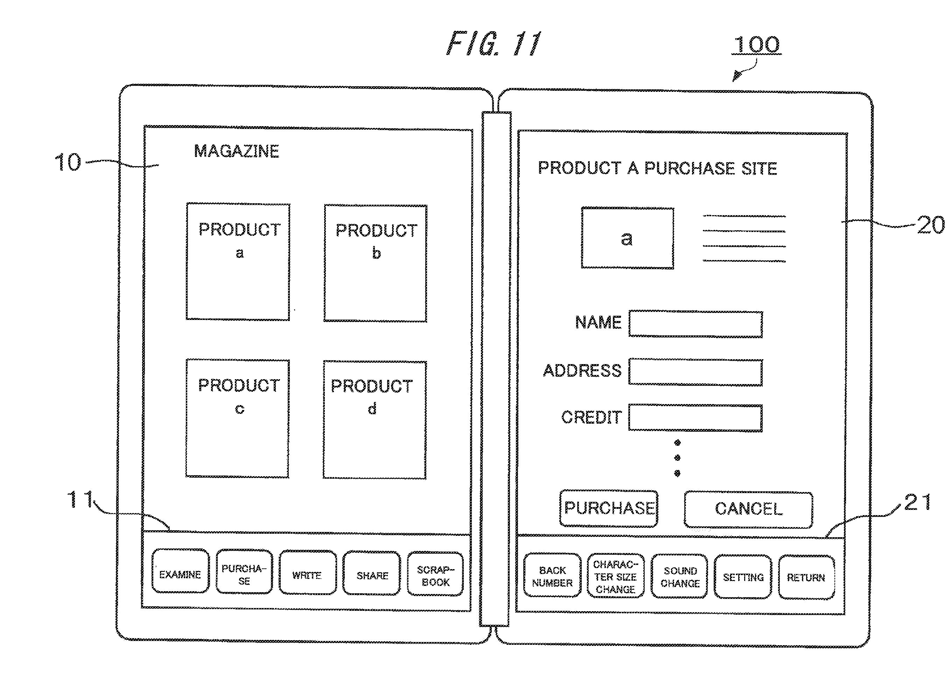

Then, the data processing part 43 executes data processing corresponding to the "Product a" selected in the displayed magazine and the operation contents "purchase" and "dedicated EC site" selected by the user. More specifically, in this case, the data processing part 43 accesses a dedicated EC site where product description and a purchase form for the "Product a" is available and acquires product purchase site data (a purchase processing screen) for purchasing the Product a. Then, the display control part 41 displays the acquired product purchase site data on the second display part 20 that is different from the first display part 10 on which the selected "Product a" is displayed as shown in FIG. 11.

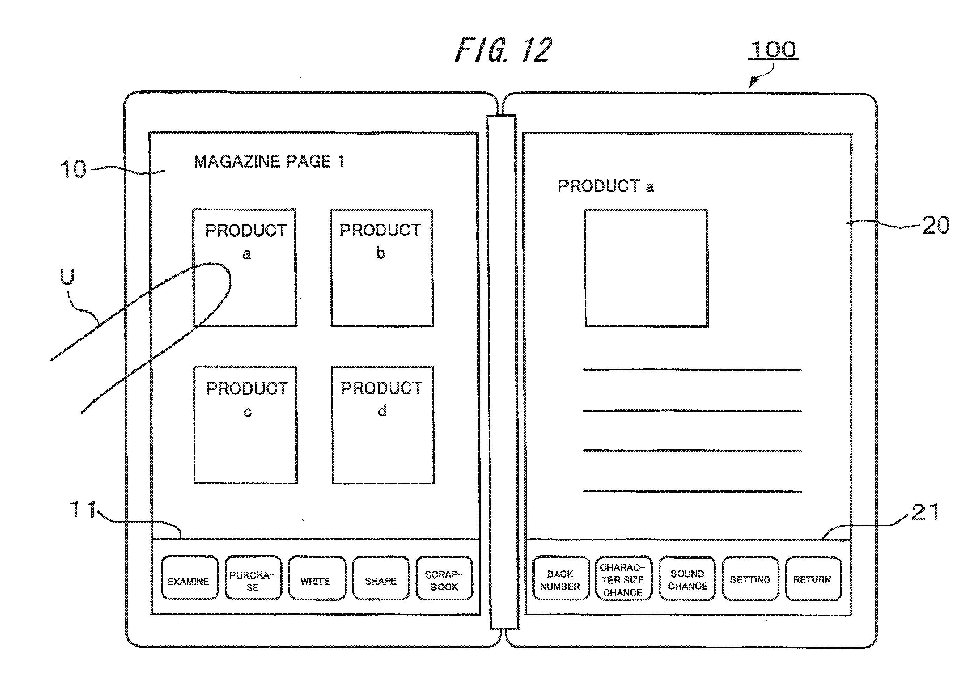

Another operation case is shown in FIGS. 12 to 14. FIGS. 12 to 14 are illustrations showing the operation and display for the user browsing a magazine on the information processing terminal 100 to purchase a "Product a" found in the magazine. First, the user selects the display position of the "Product a" in the magazine displayed on the first display part 10 (see the reference code U). Then, the operation reception part 42 receives the selection of the "product a." Then, the display control part 41 once displays detailed information on the selected "Product a" on the second display part 20. The detailed information on the Product a is stored in advance in the information processing terminal 100 together with the data for displaying the magazine and associated with the display position of the Product a. Alternatively, it is possible that the detailed information on the Product a is stored in another computer on the network and the data processing part 43 of the information processing terminal 100 accesses the other computer via the communication part 60 to acquire it.

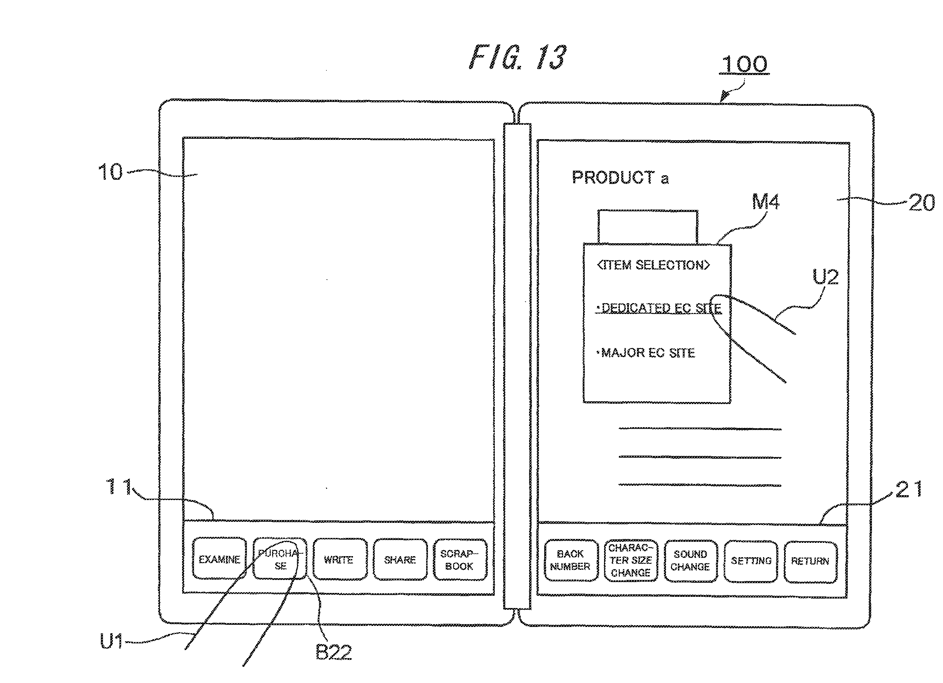

Then, while the product a is displayed on the second display part 20, the user touches the button "purchase" B22 in the operation button display region 11 to select it as shown in FIG. 13 (see the reference code U1) and the operation reception part 42 receives the selection of the operation content. Then, the display control part 41 displays a menu screen M4 presenting a list of further detailed operation items corresponding to the operation content "purchase" on the second display part 20 on which the detailed information on the "Product a" is displayed. The user touches a detailed operation item ("dedicated EC site" in this case) on the menu screen M4 to select it (see the reference code U2) and the operation reception part 42 receives the selection of the operation content indicated by this operation item.

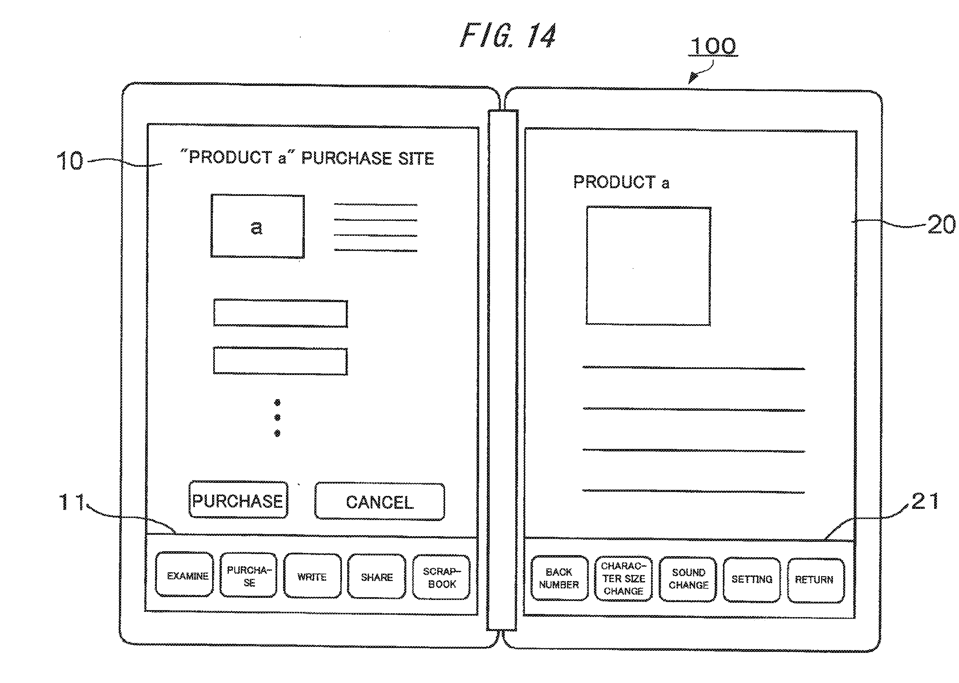

Then, the data processing part 43 executes data processing corresponding to the displayed "Product a" and the operation contents "purchase" and "dedicated EC site" selected by the user. More specifically, in this case, the data processing part 43 accesses a dedicated EC site where product description and a purchase form for the "Product a" is available and acquires product purchase site data (a purchase processing screen) for purchasing the Product a. Then, the display control part 41 displays the acquired product purchase site data on the first display part 10 that is different from the second display part 20 on which the selected "Product a" is displayed as shown in FIG. 14.

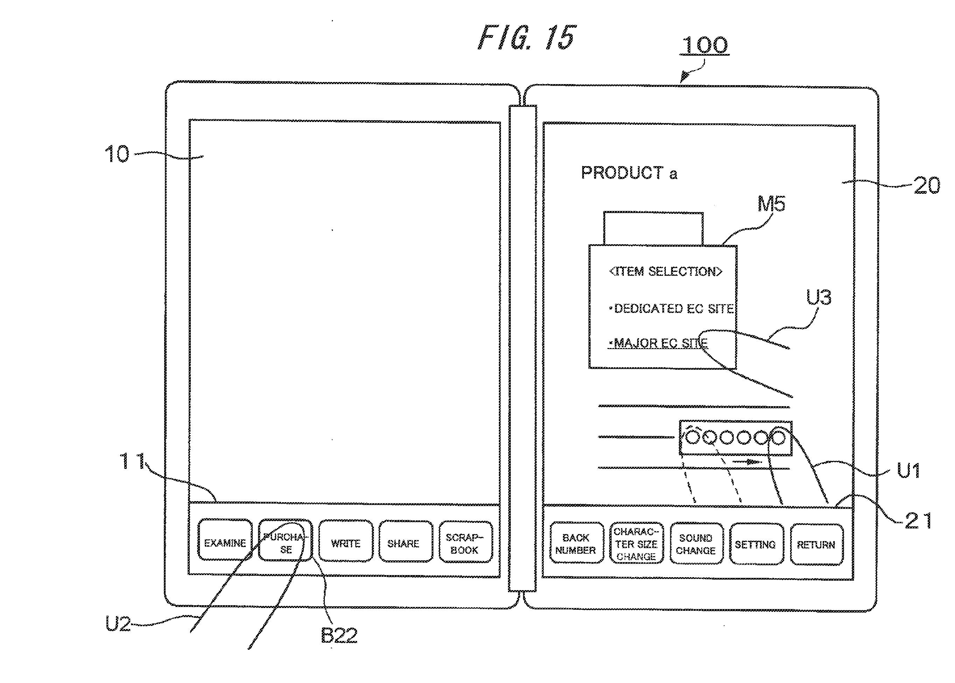

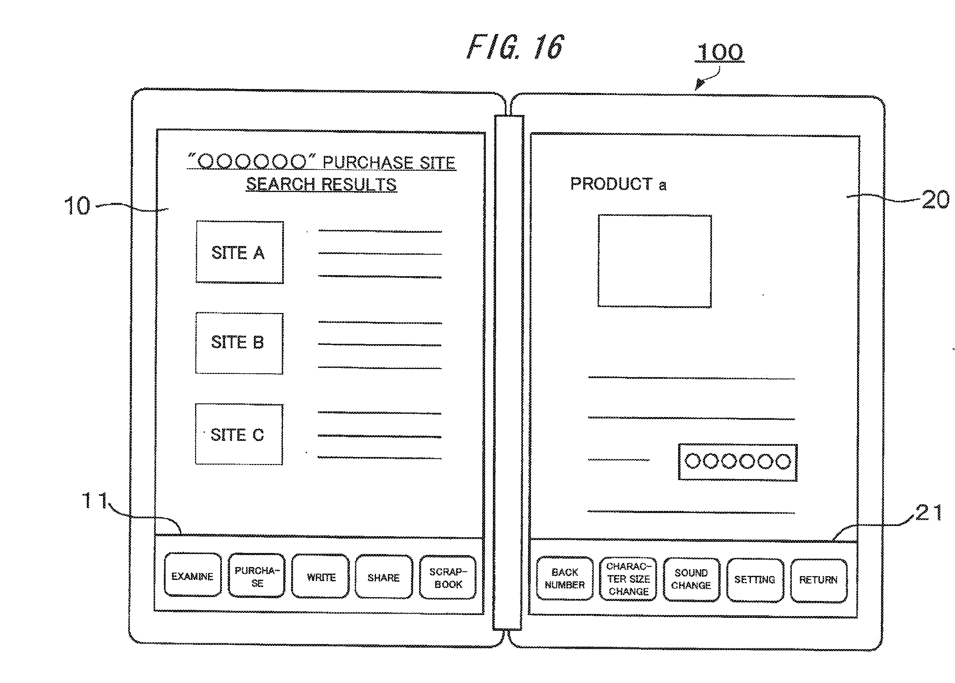

Another operation case is shown in FIGS. 15 and 16. FIGS. 15 and 16 are illustrations showing the operation and display for the user having detailed information on the Product a displayed to purchase another product specified by a particular phrase contained in the detailed information. First, the user drags on character data specifying another product in the information on the Product a displayed on the second display part 20 to select the character string ("○○○○○○" in this case) (see the reference code U1) and the operation reception part 42 receives the selection of the dragged character string. Then, the user touches the button "purchase" B22 in the operation button display region 11 to select it (see the reference code U2) and the operation reception part 42 receives the selection of this operation content. Then, the display control part 41 displays a menu screen M5 presenting a list of further detailed operation items corresponding to the operation content "purchase" on the second display part 20 on which the selected character string is displayed. The user touches a detailed operation item ("major EC site" in this case) on the menu screen M5 to select it (see the reference code U3) and the operation reception part 42 receives the selection of the operation content indicated by this operation item.

Then, the data processing part 43 executes data processing corresponding to the selected phrase ""○○○○○○ and the operation contents "purchase" and "major EC site" selected by the user. More specifically, in this case, the data processing part 43 accesses one or multiple major EC sites of which the addresses are registered in advance in the magazine data, executes searching for sites of purchasing the product specified by the selected phrase, and acquires data presenting the search results. In other words, the data processing part 43 acquires a list of Web sites where the product specified by the selected phrase is available and, in some cases, information including a purchase form. Then, the display control part 41 displays the acquired search results on the first display part 10 that is different from the second display part 20 on which the phrase for the product to be purchased is displayed as shown in FIG. 16.

In the above description, the phrase is selected and then the button "purchase" is selected. When the button "purchase" and "major EC site" have already been selected, there is no need of selecting them once again. For example, when the processing results corresponding to the operation content supposed to be selected is displayed on the first display part 10 as shown in fig. 16, it is possible that as soon as another phrase is selected on the second display part 20, the operation reception part 42 receives the selection of the product specified by the other phrase, the data processing part 43 executes searching for the product and acquires the search results, and the display control part 41 displays the search results on the first display part 10.

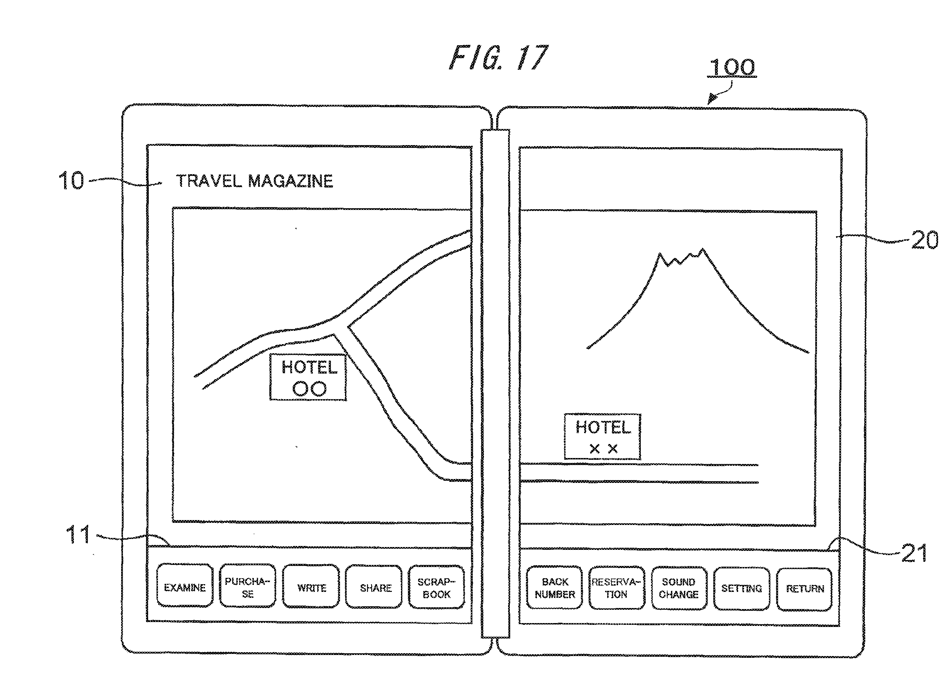

Another operation case is shown in FIGS. 17 to 19. FIGS. 17 to 19 are illustrations showing the operation and display for the user browsing a travel magazine on the information processing terminal 100 to stay at a "Hotel ○○" shown on a map in the travel magazine. First, as shown in FIG. 17, the user browsing a travel magazine displayed on the information processing terminal 100 selects the display position of the "Hotel ○○" in the travel magazine displayed on the first display part 10 (see the reference code U) and the operation reception part 42 receives the selection of the "Hotel ○○." Then, the display control part 41 displays detailed information on the "Hotel ○○" on the second display part 20 that is different from the first display part 10 on which the selected "Hotel ○○" is displayed. Here, the detailed information on the "Hotel ○○" is stored in the information processing terminal 100 in advance together with the data for displaying the magazine and associated with the display position of the Hotel _{○○}, Alternatively, the detailed information on the "Hotel ○○" is stored in another computer on the network and the data processing part 43 of the information processing terminal 100 accesses the other computer via the communication part 60 to acquire it when the Hotel ○○ is selected on the first display part 10.

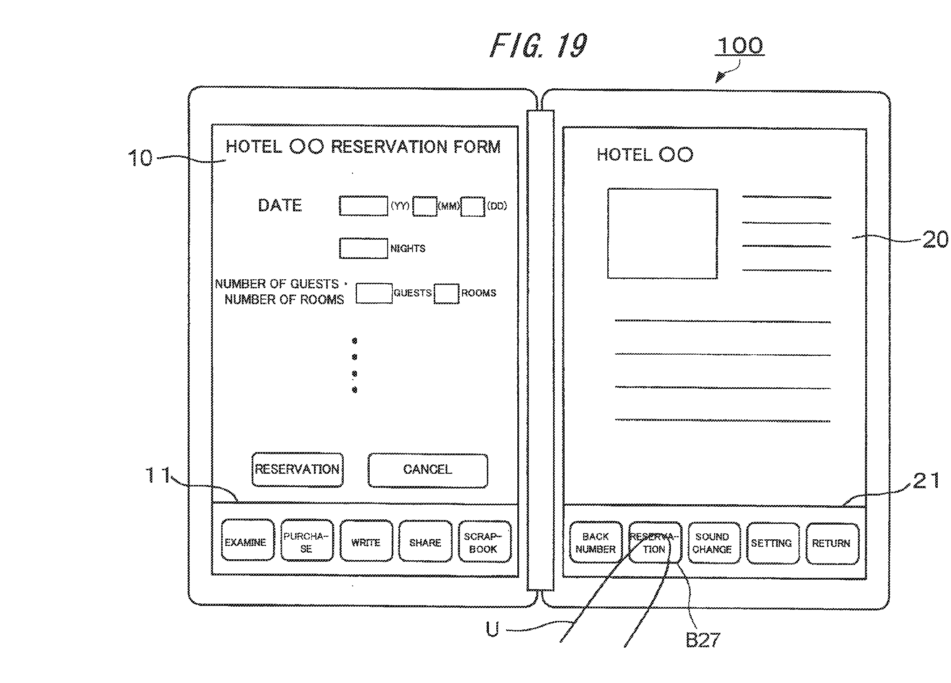

Then, while the detailed information on the "Hotel ○○" is displayed on the second display part 20, the user touches a button "reservation" B27 in the operation button display region 21 to select it as shown in FIG. 19 (see the reference code U) and the operation reception part 42 receives the selection of the operation content. Then, the data processing part 43 executes data processing corresponding to the displayed "Hotel ○○" and the operation content "reservation" selected by the user. More specifically, in this case, the data processing part 43 accesses a hotel reservation site where, a reservation form for staying at the "Hotel ○○" is available and acquires reservation form display data of the hotel reservation site. Then, the display control part 41 displays the acquired hotel reservation form on the first display part 10 that is different from the second display part 20 on which the detailed information on the "Hotel ○○" for which reservation is to be made is displayed as shown in FIG. 19.

Unlike the above-described operation method, it is possible to display the hotel reservation form without displaying the detailed information on the "Hotel ○○." For example, in the state shown in FIG. 17, first, the user selects the button "reservation" and the operation reception part 41 receives the selection of the operation content. Then, the user selects the "Hotel ○○'' for which reservation is to be made on the first display part 10 and the operation reception part 42 receives the selection of the "Hotel ○○." Then, the data processing part 43 accesses a hotel reservation site where a reservation form for staying at the "Hotel ○○" is available in accordance with the displayed " Hotel ○○" and the operation content "reservation" selected by the user to acquire reservation form display data. Then, assuming that the display state is as shown in FIG. 17, the display control part 41 displays the acquired hotel reservation form display data on the second display part 20 that is different from the first display part 10 on which the "Hotel ○○" for which reservation is to be made is displayed.

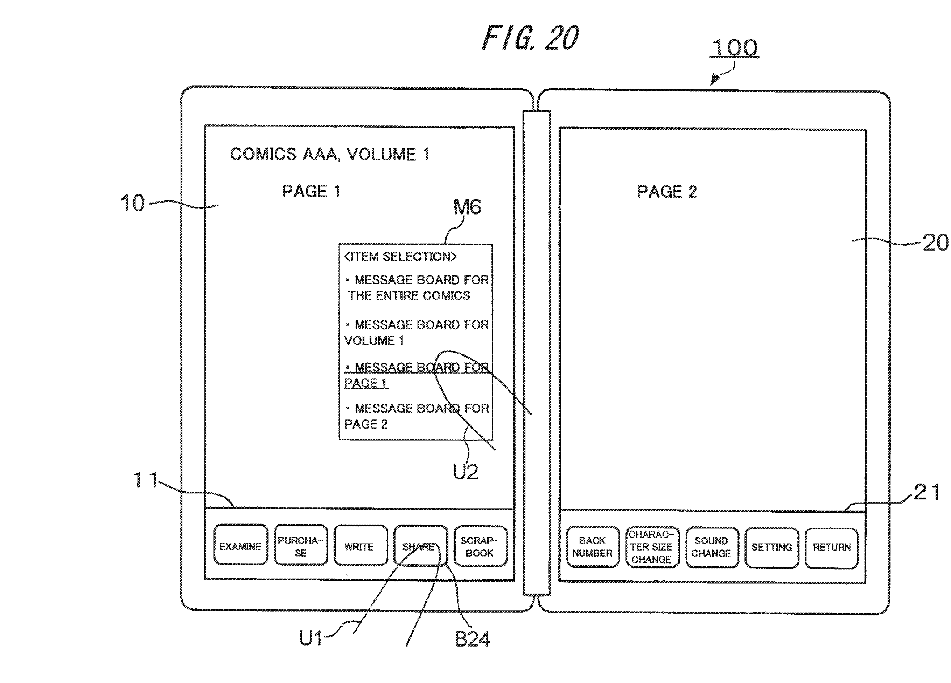

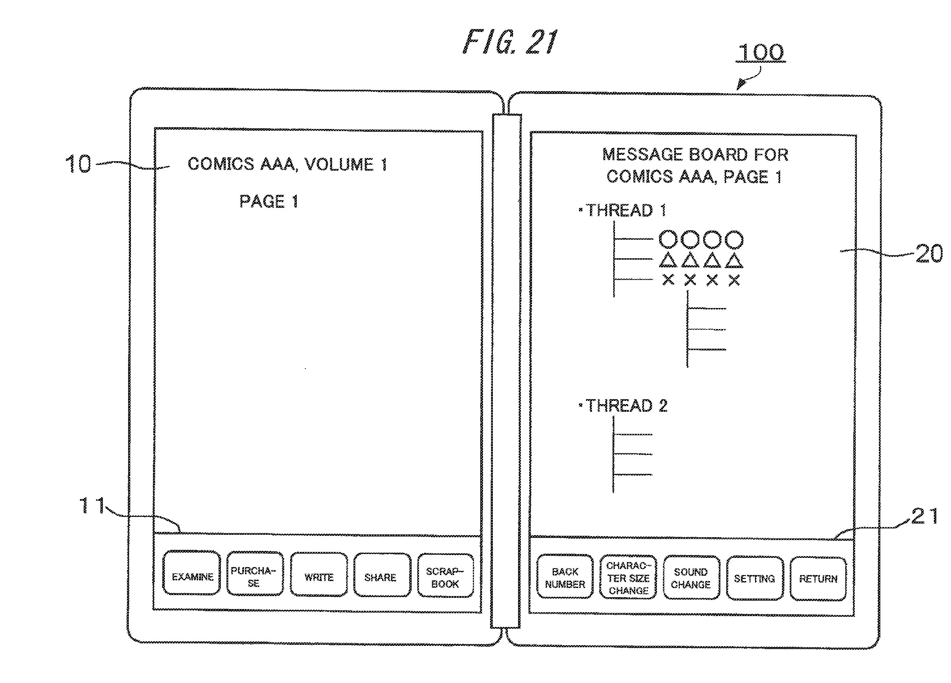

Another operation case is shown in FIGS, 20 and 21. FIGS. 20 and 21 are illustrations showing the operation and display for the user browsing a "Comics AAA, Volume 1" on the information processing terminal 100 to share information on the comics. More specifically, first, the user touches a button "share" B24 in the operation button display region 11 to select it (see the reference code U1) while the comics is displayed on the first and second display parts 10 and 20, and then the operation reception part 42 receives the selection of the operation content. Then, the display control part 41 displays a menu M6 presenting a list of further detailed operation items corresponding to the operation content "share" on the first display part 10 on which the comics is displayed. The user touches a detailed operation item ("Page 1 Message Board" in this case) on the menu screen M6 to select it (see the reference code U2) and the operation reception part 42 receives the selection of the operation content. Here, the detailed items of the operation content "share" include accessing to a community site (information-sharing Web site) (access destination) such as message board sites where the users can share information. Particularly, selection can be made among message sites for the entire book, each volume, or each page of the comics the user is browsing.

Then, the data processing part 43 executes data processing corresponding to the "Comics AAA, Volume 1, Page 1" displayed on the first display part 10 and the operation contents "share" and "Page 1 Message Board" selected by the user as shown in FIG. 20. More specifically, in this case, the data processing part 43 accesses a message board site relating to the "Comics AAA, Volume 1, Page 1" to acquire data for displaying the message board site. Then, the display control part 41 displays the acquired message board site relating to the Page 1 on the second display part 20 that is different from the first display part 10 on which the "Comics AAA, Volume 1, Page 1" is displayed.

In the above description, the message board relating to the page 1 of a comics is displayed by way of example. When the message board (site) assigned to a volume of the comics or to the entire comics is selected, the information processing terminal 100 displays a different message board (site) according to the selection.

### [Action]

Action of the information processing terminal 100 having the above configuration will be described hereafter with reference to the flowchart in FIG. 22. First, the user operates the information processing terminal 100 to select a book (book content) to be displayed (Step S1). Then, the display control part 41 of the information processing terminal 100 acquires the selected book content such as a newspaper, magazine, and comics from the content storage 51 and displays it two pages at a time on the first and second display parts 10 and 20 (Step S2). The selected content may be acquired by the data processing part 43 from another computer via the communication part 60.

Then, when the user wishes a specific operation on the displayed page (display data), he/she touches an operation button for that operation in the operation button display regions 11 and 12 to select it (Step S3: Yes).
Then, the operation reception part 42 receives the operation content corresponding to the selected operation button. Here, if further detailed operation contents are prepared for the received operation content, the display control part 41 displays a menu screen presenting the prepared further detailed operation contents (items) and the operation reception part 42 receives the selection of an operation content (item) on the menu screen (Step S4: the operation instruction reception step).

Subsequently, the data processing part 43 of the information processing terminal 100 acquires from a related Web site or the like data corresponding to the content of the display data displayed and the operation content of which the selection is received (Step S5: the data processing step). Then, the display control part 41 displays data acquired from the Web site or the like, namely data of search results, a purchase screen, or a message board on another display part that is different from the display part on which the display data of interest is displayed (Step S6: the display control step).

In case of wishing to acquire data corresponding to a specific phrase or display in the information displayed on the display part, the user selects the phrase or display before or after selecting the operation content in the Steps S3 and S4. Then, the information processing terminal 100 executes processing corresponding to the selected operation content with regard to the information associated with to the selected phrase or display.

In this way, for example, in the case of FIG. 6, the information processing terminal 100 displays on the first display part 10 the results of searching for news containing the newspaper article title displayed on the second display part 20. On the other hand, in the case of FIG. 8, the information processing terminal 100 displays on the fist display part 10 the results of searching a dictionary for the phrase "○○○○" selected in the newspaper article displayed on the second display part 20. Furthermore, in the case of FIG. 12, the information processing terminal 100 displays on the second display part 20 a purchase screen for the Product a in the magazine displayed on the first display part 10. Furthermore, in the case of FIG. 14, the information processing terminal 100 displays on the first display part 10 a purchase screen for the Product a displayed on the second display part 20. Furthermore, in the case of FIG. 16, the information processing terminal 100 displays on the first display part 10 the results of searching a site for purchasing a product specified by the phrase "○○○○" selected in the Product a information displayed on the second display part 20. Furthermore, in the case of FIG. 19, the information processing terminal 100 displays on the first display part 10 a screen for making a reservation at the Hotel ○○ displayed on the second display part 20. Furthermore, in the case of FIG. 21, the information processing terminal 100 displays on the second display part 20 a message board site for the Page 1 of the Comics AAA displayed on the first display part 10.

As described above, the information processing terminal 100 of the present invention continues to display the original display data on one display part and displays on another display part processing executed based on that display data such as search results and a purchase Web site screen. Therefore, the user can view the display data and simultaneously view and operate on the processing data with respect to the display data on another display part with simple operations. Consequently, operability of the display operation and visibility of the display data can be improved.

In the above information processing terminal 100, two display parts 10 and 20 are coupled by a hinge 3 so that they can be opened/closed. The present invention is not confined to this structure. For example, two display parts 10 and 20 can be coupled slidably or provided separately as described later.

### <Embodiment 2>

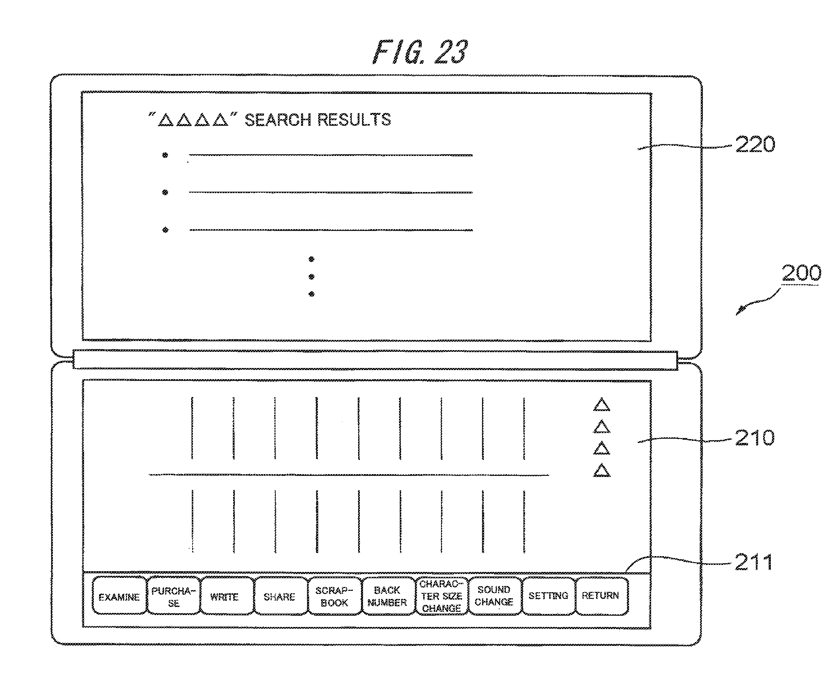

Embodiment 2 of the present invention will be described hereafter with reference to FIG. 23. FIG. 23 is an illustration showing the appearance of an information processing terminal 200 of this embodiment and an operation and display of the information processing terminal 200.

The information processing terminal 200 (an information processing device) of this embodiment is a folding-type information processing terminal having a first display part 210 and a second display part 220 that are coupled to each other via a hinge part so that they can be opened/closed on an arbitrary basis. Structurally, the information processing terminal 200 is rotated by 90 degrees from the information processing terminal 100. In other words, the information processing terminal 200 of this embodiment has the first and second display parts 210 and 220 one above the other, instead of side by side as in Embodiment 1. Furthermore, an operation button display region 211 is collectively located at the bottom of the first display part 210. Here, the information processing terminal 200 has the same internal configuration as the one shown in FIG. 2.

Therefore, for example, as shown in FIG. 23, when display data are displayed on the first display part 210 and the user selects an operation button "examine" with regard to the display data, first, the information processing terminal 200 identifies the display data and receives the selection of the operation content "examine." Then, the information processing terminal 200 searches a Web site for information relating to the display data, acquires search results, and displays the search results on the second display part 220. The information processing terminal 200 of this embodiment can also execute other processing according to operation instructions as in Embodiment 1.

Here, the information processing terminal 200 of this embodiment can simply consist of the same terminal as the information processing terminal 100 described in Embodiment 1. In other words, the information processing terminal 200 can be realized by the information processing terminal 100 being rotated by 90 degrees; then, the information processing terminal 100 detects it using built-in acceleration sensors, automatically rotates the displays of the display data on the first and second display parts 10 and 20 by 90 degrees in the same direction, and displays the operation button display region at the changed position.

### <Embodiment 3>

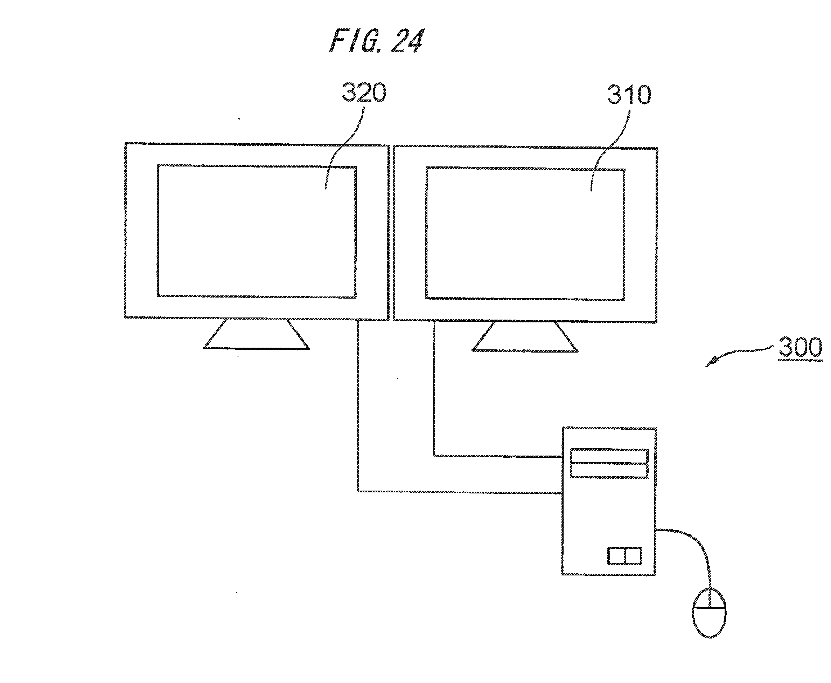

Embodiment 3 of the present invention will be described hereafter with reference to FIG. 24. FIG. 24 is an illustration showing the appearance of an information processing device 300 of this embodiment and an operation and display of the information processing device 300.

The information processing device 300 of this embodiment is a dual display type computer comprising a first display part 310 and a second display part 320 that are connected. The information processing device 300 has the same internal configuration as the one shown in FIG. 2.

Therefore, for example, when display data are displayed on the first display part 310 and the user selects an operation button "examine" for the display data, first, as described above, the information processing device 300 displays the search results on the second display part 320. The information processing device 300 of this embodiment can also execute other processing according to operation instructions as in Embodiment 1.

As described above, the present invention is not confined to an information processing terminal having two display parts coupled to each other so that they can be opened/closed. The present invention is applicable to an information processing device having two display parts provided separately.

In the above description, the present invention is applied to an information processing terminal (device) having two display parts by way of example. The information processing terminal (device) does not necessarily comprise two display parts. In other words, even if the information processing terminal (device) has three or more display parts, the user can view display data and simultaneously view and operate on the processing data with regard to the display data on another display part with simple operation as long as processing results corresponding to the content of display data are displayed on a display part that is different from the display part on which the display data are displayed. Consequently, operability of the display operation and visibility of the display data can be improved.

The present invention is based on the Japanese Patent Application No. 2008-169873 filed on June 30, 2008, the Specification, Scope of Claims, and Drawings of which are entirely incorporate herein by reference.

### Industrial Applicability

The present invention is applicable to an information processing device having multiple display parts such as folding-type portable information processing terminals and has industrial applicability.

### Legend

- 1: first enclosure
- 2: second enclosure
- 3: hinge
- 10, 210, 310: first display part
- 20, 220, 320: second display part
- 40: CPU
- 41: display control part
- 42: operation reception part
- 43: data processing part
- 50: memory
- 51: content storage
- 60: communication part
- 100, 200: information processing terminal
- 300: information processing device

## Claims

1. An information processing device comprising multiple display parts, a display control means controlling the display operation of the display parts, an operation instruction reception means receiving the entry of a given operation instruction on display data displayed on one of said multiple display parts, and a data processing means executing processing based on the content of said display data displayed on said one display part and the content of said operation instruction received by said operation instruction reception means,
wherein said display control means displays data presenting the results of processing by said data processing means on another display part that is different from said one display part.

2. The information processing device according to Claim 1 wherein said data processing means accesses a data storage region corresponding to the content of said operation instruction and acquires from said data storage region data corresponding to the content of said display data displayed on said one display part, and
said display control means displays the data acquired by said data processing means on said other display part.

3. The information processing device according to Claim 1 wherein said data processing means accesses a given Web site corresponding to the content of said operation instruction and acquires from the Web site data corresponding to the content of said display data displayed on said one display part, and
said display control means displays the data acquired by said data processing means on said other display part.

4. The information processing device according to Claim 3 wherein said data processing means accesses a given Web site corresponding to the content of said operation instruction and acquires from the Web site data corresponding to the data at a specific position preset for said display data displayed on said one display part.

5. The information processing device according to Claim 3 wherein the information processing device further comprises a selection reception means receiving the entry of selection of a given position within said display data displayed on said one display part, and
said data processing means accesses a given Web site corresponding to the content of said operation instruction and acquires from the Web site data corresponding to the data at the selected position selected by said selection reception means within said display data displayed on said one display part.

6. The information processing device according to Claim 3 wherein when said operation instruction received by said operation instruction reception means is an information search instruction, said data processing means accesses a Web site performing information search and acquires from the Web site data presenting the results of information search corresponding to the content of said display data.

7. The information processing device according to Claim 3 wherein when said operation instruction received by said operation instruction reception means is a purchase instruction, said data processing means accesses a Web site performing purchase processing and acquires from the Web site data presenting a purchase processing screen corresponding to the content of said display data.

8. The information processing device according to Claim 3 wherein when said operation instruction received by said operation instruction reception means is an information sharing instruction, said data processing means accesses an information sharing Web site corresponding to the content of said display data and acquires data of the Web site.

9. The information processing device according to Claim 1 wherein said operation instruction reception means displays on said display parts operation instruction display presenting operation instructions preset according to the content of the display data displayed on said one display part and receives the entry of selection on the operation instruction display displayed on the display parts so as to receive the entry of an operation instruction corresponding to the operation instruction display.

10. The information processing device according to Claim 9 wherein a first operation instruction display as said operation instruction display displayed on said display parts by said operation instruction reception means and a second operation instruction display presenting further detailed operation instructions for the operation instructions corresponding to the first operation instruction display are preset,
said operation instruction reception means displays said first operation instruction display and receives a selection from the first operation instruction display, and displays said second operation instruction display preset for the selected operation instruction corresponding to the first operation instruction display and receives a selection from the second operation instruction display, and
said data processing means executes processing based on the content of the selected operation instruction corresponding to the second operation instruction display.

11. The information processing device according to Claim 1 wherein said multiple display parts are two display parts engaged in the manner that they can be viewed simultaneously, and
said display control means displays, on the other display part, data presenting the results of processing executed by said data processing means based on the content of display data displayed on one of the display parts.

12. The information processing device according to Claim 11 wherein said two display parts are coupled in the manner that they can be opened/closed or slid,

13. The information processing device according to Claim 1 wherein said display parts consist of a touch panel and are capable of receiving touch input from outside, and
said operation instruction reception means receives the selection of operation instruction display displayed on said display parts that is done by touch input on the operation instruction display so as to receive the entry of the selected operation instruction corresponding to the operation instruction display.

14. A computer-readable recording medium in which recorded are programs that allow an information processing device comprising multiple display parts to realize a display control means controlling the display operation of said display parts, an operation instruction reception means receiving the entry of a given operation instruction on display data displayed on one of said multiple display parts, and a data processing means executing processing based on the content of said display data displayed on said one display part and the content of said operation instruction received by said operation instruction reception means,
wherein said display control means displays data presenting the results of processing by said data processing means on another display part that is different from said one display part.

15. The recording medium according to Claim 14 wherein said data processing means accesses a data storage region corresponding to the content of said operation instruction and acquires from the data storage region data corresponding to the content of said display data displayed on said one display part, and
said display control means displays data acquired by said data processing means on said other display part.

16. A display control method having an operation instruction reception step of receiving the entry of a given operation instruction on display data displayed on one of multiple display parts; a data processing step of executing processing based on the content of said display data displayed on said one display part and the content of said operation instruction received by said operation instruction reception step; and a display control step of displaying data presenting the results of processing in said data processing step on another display part that is different from said one display part.

17. The display control method according to Claim 16 wherein said data processing step consists of accessing a data storage region corresponding to the content of said operation instruction and acquiring from the data storage region data corresponding to the content of said display data displayed on said one display part, and
said display control step consists of displaying data acquired in said data processing step on said other display part.
